# EUROPÄISCHE PATENTSCHRIFT

(11) **EP 1 181 449 B1**
(45) Veröffentlichungstag und Bekanntmachung des Hinweises auf die Patenterteilung: **07.07.2004**
(21) Anmeldenummer: 00931135.8
(22) Anmeldetag: 08.05.2000
(51) Int. Cl.: F04B 17/00, B01L 3/02, G01N 1/14, G01N 1/24, A61M 5/20, A61M 5/31, F03G 7/00

(54) **PUMPENZYLINDER UND VERFAHREN ZUR SAMMLUNG VON PASTÖSEN MASSEN, FLÜSSIGKEITEN, GASEN UND/ODER MOBILEN OBJEKTEN**
PUMP CYLINDER AND METHOD OF COLLECTING PASTY MATERIALS, LIQUIDS, GASES AND/OR MOBILE OBJECTS
CYLINDRE DE POMPAGE ET PROCEDE D'ACCUMULATION DE MASSES PATEUSES, DE LIQUIDES, DE GAZ ET/OU D'OBJETS MOBILES

(30) Priorität: 03.06.1999 DE 19925481
(43) Veröffentlichungstag der Anmeldung: 27.02.2002
(73) Patentinhaber: GCT Gas-Cell-Tec AG, 3370 Herzogenbuchsee (CH)
(72) Erfinder: Winsel, August, Prof. Dr., 65779 Kelkheim (DE)
(74) Vertreter: Specht, Peter, Dipl.-Phys.
(86) Internationale Anmeldenummer: PCT/EP2000/004103
(87) Internationale Veröffentlichungsnummer: WO 2000/075512

(56) Entgegenhaltungen:
- EP-A- 0 204 872
- DE-A- 3 711 714
- DE-C- 4 331 764
- US-A- 3 739 573
- US-A- 4 281 545
- US-A- 5 671 905
- US-A- 5 855 761

## Beschreibung

Die Erfindung betrifft einen Pumpenzylinder nach dem Oberbegriff des Anspruches 1 sowie ein Verfahren nach dem Oberbegriff des Anspruches 14.

Ein derartiger Pumpzylinder ist aus der EP 0 204 872 bekannt. Er eignet sich zum Einsatz als Motor.

In der US-PS 1,500,975 wird eine Maschine beschrieben, die aus drei miteinander verbundenen Zylindern und drei darin geführten, starr miteinander verbundenen Kolben besteht. Die drei Zylinder haben unterschiedliche Durchmesser. Während der Hauptzylinder durch wechselseitige Bedrückung der durch den Kolben unterteilten Räume mit Vakuum und atmosphärischem Druck hin und her bewegt wird, dienen die beiden anderen Zylinder und die synchron darin bewegten Kolben zur stufenweisen Aufkomprimierung von Luft. In der GB-PS 911,493 wird ein Schmierstoffspender beschrieben. Bei diesem drückt eine Schierstoffpumpe den Schmierstoff in eine Ringleitung, die eine oder mehrere Schmierstellen versorgt. Die Ringleitung führt über ein Überdruckventil den Überschuß an Schmiermittel in den Vorratsbehälter zurück.

Es sind Vorrichtungen bekannt und im Vertrieb, mit denen pastöse Massen und Flüssigkeiten kontinuierlich gefördert werden können. Bei einer dieser Vorrichtungen (Fettspender PERMA der Firma G. Satzinger in Bad Kissingen) ist ein zylindrischer Körper durch eine als Kolben wirkende Membran in zwei Teilräume aufgeteilt. Der eine Teilraum enthält das zu fördernde Medium, das über die am einen Ende angebrachte Tülle abgegeben wird; der zweite Raum enthält eine Gasentwicklungs-Vorrichtung, die kontinuierlich aus einem Korrosionselement Wasserstoff entwickelt. Dadurch wird ein Druck aufgebaut, der Kolben verdrängt und das zu fördernde Medium aus der Tülle gedrückt.

Das Korrosionselement besteht dort aus einer Zinkronde mit eingelötetem Molybdänstab. Sie wird bei der Aktivierung in einen Kalilaugesee eingebracht. Der Ablauf der Gasentwicklung ist damit unaufhaltsam vorgegeben. Er hängt von der Temperatur ab. Die Fördergeschwindigkeit selbst ist noch von dem Gegendruck an der Tülle abhängig, da bei konstanter Gasentwicklungsrate die Volumenproduktion des Wasserstoffs umgekehrt proportional zum Druck ist.

Gegenüber einem Kurzschlußelement bietet die Wasserstoff entwickelnde Zelle, wie sie in der DE-PS 35 32 335 A1 beschrieben ist, den Vorteil, daß die Wasserstoffentwicklung über einen von außen zu regelnden Widerstand genau gesteuert werden kann. Diese Zelle besteht in einer Variante aus einer Zinkanode und einer Wasserstoffkathode mit Kalilauge als Elektrolyt und einem Separator, der Anode und Kathode trennt. In einer anderen Variante der Zelle entwickelt sie Sauerstoff als Treibgas, wobei als Gegenkathode eine reduzierbare Elektrode z.B. aus Mangandioxid MnO₂ oder AgO oder einem anderen Metalloxid verwendet wird. Als Anode dient eine Sauerstoffabscheidungselektrode. Charakteristisch ist für die Gasentwicklungselektroden in beiden Fällen sowohl für Sauerstoff als auch für Wasserstoff, daß das Elektrodenmaterial eine möglichst geringe Überspannung für das zu entwickelnde Gas besitzt, wofür in beiden Fällen Raney-Nickel und Aktivkohle als Katalysator dienen kann.

In der DE 36 21 846 A1 wird eine Fördervorrichtung beschrieben, bei der die zu fördernde Flüssigkeit über eine oder eine Vielzahl von Poren in einem gegenüber der zu fördernden Flüssigkeit lyophoben Körper transportiert wird. Diese Maßnahme, die den Förderstrom in einen Strom diskreter Tropfen aufteilt, stellt eine Druckschleuse dar, die den Förderfluß vom Gegendruck unabhängiger macht. Diese Druckschleuse kann auf der Anund auf der Abströmseite zwischen lyphilen porösen Körpern angeordnet sein und mit diesen kommunizieren.

Derartige Fördervorrichtungen lassen sich vielseitig einsetzen. Zum Beispiel wurde die Injektion von Insulinlösung oder anderer Medikamente in den Körper mit Hilfe solcher Fördervorrichtungen vorgeschlagen. Einer früheren Erfindung (DE 3711714 C2 vom 07. 04. 1987) lag die Aufgabe zugrunde, eine Vorrichtung der eingangs genannten Art dahingehend weiterzubilden, daß die Fördergeschwindigkeit vorbestimmbar und regelbar wird und daß die Vakuumerzeugung mit möglichst einfachen Mitteln erfolgt. Das Kernstück ist eine Kraftmaschine, die aus einem im wesentlichen starren Antriebszylinder mit einem darin beweglichen Antriebskolben oder einer als Kolben wirkenden Membran besteht. Im Ausgangszustand ist dieser Antriebszylinder mit einem elektrochemisch wirksamen Gas wie Wasserstoff oder Sauerstoff unter Atmosphärendruck gefüllt. Innerhalb dieses Antriebszylinders befindet sich eine Gasverzehrzelle mit einer Gasverzehrelektrode und einer geeigneten Gegenelektrode, die in einem Zellgefäß angeordnet sind. Zwischen den Elektroden befindet sich ein Separator mit einem geeigneten Elektrolyten. Die Kontakte der beiden Elektroden sind außerhalb des Zylinderraumes zugänglich oder von außerhalb zu betätigen.

Bei Schließung über einen äußeren Schließungskreis wird ein Stromfluß in der Zelle erzeugt, der pro Zeiteinheit eine äquivalente Menge des Reaktionsgases verzehrt und dadurch einen Unterdruck gegenüber der äußeren Atmosphäre erzeugt. Dieser Unterdruck bewirkt eine Bewegung des Antriebskolbens, so daß dieser eine äußere Arbeitsleistung vollbringen kann.

Im Falle der Fördervorrichtung nach DE 3711714 C2 besteht die Arbeitsleistung in der Bewegung eines Pumpenkolbens in einem Pumpenzylinder, der mit dem Antriebszylinder der Kraftmaschine vorzugsweise starr verbunden ist. Auch der Pumpenkolben ist mit dem Antriebskolben der Kraftmaschine vorzugsweise starr verbunden. Dieser Pumpenzylinder enthält die zu fördernde Flüssigkeit, die durch die gekoppelte Bewegung der beiden Kolben über die Fördertülle oder über eine Druckschleuse ausgedrückt wird.

Ausgehend von dem bestehenden Stand der Technik geht die Erfindung einen anderen, bisher nicht erkannten Weg, indem sie die an sich bekannten Pumpzylinder zur Sammelung von Proben verschiedenster Art auslegt und nutzt. Die Erfindung erreicht dies durch die Gegenstände der Ansprüche 1 und 14.

Die vorliegende Erfindung schließt sich zwar einem Teil der Lehre der DE 3711714 C2 an. Sie hat im Gegensatz zu dieser aber nicht die Verteilung fluider Medien sondern deren Einsammlung zur Aufgabe. In vielen Bereichen der Fertigungskontrolle, des Umweltschutzes, der Medizin und der Biologie müssen Proben von pastösen, flüssigen, gasförmigen Stoffen oder von mobilen Objekten eingesammelt, verwahrt und untersucht werden, wobei die Zeiträume der Probensammlung sich über Stunden und Monate erstrecken können. Einige Beispiele sollen dies demonstrieren:
- Abwasser wird von vielen kleinen und großen Unternehmen in das öffentliche Kanalisationsnetz geleitet. Der Nachweis der Einleitung von Giftstoffen ist nur bei ständiger Entnahme von Proben und deren Analyse möglich.
- Die Sammlung von Gasproben bei Umsetzungen in technischen Geräten ermöglicht ebenfalls die Aufklärung und die Kontrolle von Reaktionsabläufen in Gasen.
- Die Einsammlung von Milchproben automatisch gemolkener Kühe ermöglicht die Ermittlung der Durchschnittswerte der Fettproduktion eines Tieres. Auch Proben der Körperflüssigkeiten von Menschen und Tieren sind oft hilfreich bei der Diagnose von Krankheiten.
- In den biologischen Bereich fällt die Einsammlung von Kleintieren und Mikroben in Wald und Feld und auch die Einsammlung von Luftproben zur Zeit des Pollenfluges.
- Bei der Fertigung von Nahrungsmitteln aber auch bei der Überwachung der Biologie von Gewässer interessiert der Nachweis von Krankheitskeimen oder auch dessen Ausschluß durch die Einsammlung von Proben.

Geschafft wird in einfacher Weise eine Vorrichtung zur Sammlung pastöser Massen, Flüssigkeiten Gase und/ oder anderer mobiler Objekte, die über einen vorher bestimmbaren Zeitraum das Sammeln der Proben erlaubt.

Eine vorteilhafte konstruktive Variante zeichnet sich dadurch aus, dass das Verzehrgas und die Verzehrzelle im Antriebszylinder von einer deformierbaren Plastikfolie eingehüllt sind.

Nach einer weiteren bevorzugten Ausführungsform ist das Verzehrgas Sauerstoff und die Verzehrzelle enthält neben einer Gasdiffusionselektrode für Sauerstoff eine Akkumulatorenelektrode als Gegenelektrode vorzugsweise in alkalischer Elektrolytlösung.

Besonders bevorzugt ist zur Gewährleistung der sicheren Funktion der Vorrichtung in der Ansaugleitung ein Ventil vorhanden, das bei Unterdruck in Saugrichtung öffnet und bei Überdruck in Ausflussrichtung sperrt.

Nach einer weiteren besonders vorteilhaften Ausgestaltung ist der elektrische Stromkreis derart ausgelegt, dass er einen Stromfluß in der oder den Verzehrzellen nur in dem Spannungsfenster zulässt, in dem der Gasverzehr abläuft und sperrt in den übrigen Spannungsbereichen den Stromfluß. Auf diese Weise wird unkompliziert sichergestellt, dass der Pumpenzylinder nur im "Sammel- und Saugmodus" betrieben wird.

Bevorzugt enthält der elektrische Stromkreis einen optischen oder akustischen Signalgeber, der sein Signal dann erzeugt, wenn der Stromfluß im Spannungsfenster abläuft, das den Gasverzehr zulässt.

Nach einer weiteren vorteilhaften Variante ist neben dem einstellbaren Arbeitswiderstand ein Startwiderstand vorhanden, über den die Verzehrzelle solange kurzgeschlossen ist, bis die Bewegung des Kolbens einsetzt. Bevorzugt ist ferner zum Ausschalten des Startstromes ein manueller Schalter oder ein Druckschalter vorgesehen, der auf die Druckdifferenz zu beiden Seiten des Kolbens anspricht oder auf die Bewegung des Kolbens aus der Anfangsstellung des Kolbens im Zylinder.

Im allgemeinen wird ein möglichst reines Verzehrgas verwendet, um den vollen Kolbenhub auszunutzen. Durch Beigabe einer inerten Verunreinigung kann man jedoch den Sammelvorgang begrenzen, da das Inertgas als Restgas im Kolben verbleibt.

In den Stromkreis des Treibeinsatzes können in vorteilhafter Weise Zeitschalter, Photowiderstände und/oder Photozellen als regelnde Komponenten mit zusätzlichen Gleichstromzellen angeordnet sein. Dadurch kann man den Sammelvorgang auf bestimmte Tageszeiten, Lichtverhältnisse und/oder andere Gegebenheiten begrenzen.

Im Anschluß an die Probeentnahme können dann eine Analyse des entsprechend der zeitlichen Entnahme geschichteten Inhalts und/oder ein Vermischen des Inhalts und dann dessen Analyse erfolgen.

Bevorzugt schafft die Erfindung ferner ein Verfahren zur Sammlung mobiler biologischer Objekte während eines vorher bestimmten Zeitraums in einem erfindungsgemäßen Pumpzylinder, bei dem die Einbringung eines Lockmittels in den vorderen Zylinderraum vor dem Einschalten des Verzehrstromes erfolgt.

Mit dem Pumpenzylinder kann einem begrenzten Körperbereich eines Lebewesens (z. B. einem Organ) ein Medikament zugeführt und nach einem vorbestimmten Zeitraum dem begrenzten Körperbereich das Medikament und/oder andere Körperflüssigkeiten zumindest teilweise mittels einem erfindungsgemäßen Pumpenzylinder wieder entzogen werden.

Der Pumpenzylinder eignet sich dabei insbesondere dazu, einem begrenzten Körperbereich eines Lebewesens (z. B. einem Organ) eine Überdosis eines Medikamentes mit einer Spritze zuzuführen und diese "Überdosis" dem begrenzten Körperbereich mittels einer erfindungsgemäßen "Saugpumpe" wieder zu entziehen.

Der Pumpenzylinder - beispielsweise in Form einer Spritze - wird oben vorzugsweise durch den Einsatz verschlossen, der im Zylinder fixiert, z. B. mit einem O-Ring einund abgedichtet und/oder am Pumpenzylinder verschraubt sein kann. In den Einsatz wird ein Saug- und/oder Treibeinsatz eingeschoben, der ebenfalls mit einem O-Ring abgedichtet ist.

Der Treibeinsatz enthält die wenigstens eine Gasverzehrzelle oder mehrere dieser Zellen in Reihen- oder Parallelschaltung. Dazu kommt in Serienschaltung die Zenerdiode oder eine Diode mit entsprechender Schleusenspannung.

Der Treibeinsatz hat zwei Stellungen, die durch eine Bohrung gekennzeichnet sind. Diese Bohrung führt in den Treibeinsatz und ermöglicht die Zuführung des Verzehrgases in den Zylinderraum, wobei der Kolben aus seiner obersten Stellung in die unterste getrieben wird. Danach wird der Treibeinsatz in eine Wartestellung verschoben, in welcher die Bohrung des Treibeinsatzes verschlossen ist. Nach der Aktivierung des Treibeinsatzes fließt der Strom, welcher das Verzehrgas bindet, den Kolben hochzieht und den erfindungsgemäßen Vorgang der Sammlung ablaufen läßt.

Der Kolben kann eine Bohrung aufweisen, welche durch eine Fritte verschlossen sein kann.

Mit Hilfe einer benetzenden Flüssigkeit wird die Bohrung verschlossen, nach dem man sie zum Einfüllen des Verzehrgases genutzt hat.

Weitere Ausgestaltungen der Erfindung sind den übrigen Unteransprüchen zu entnehmen.

Nachfolgend wird die Erfindung unter Bezug auf die Zeichnung anhand von Ausführungsbeispielen näher erläutert. Es zeigt:
- Fig. 1 bis 4: verschiedene Ausführungsbeispiele der Erfindung;
- Fig. 5: eine bevorzugte Ausgestaltung des oberen Bereichs des Zylinders und des einsteckbaren Antriebselementes.

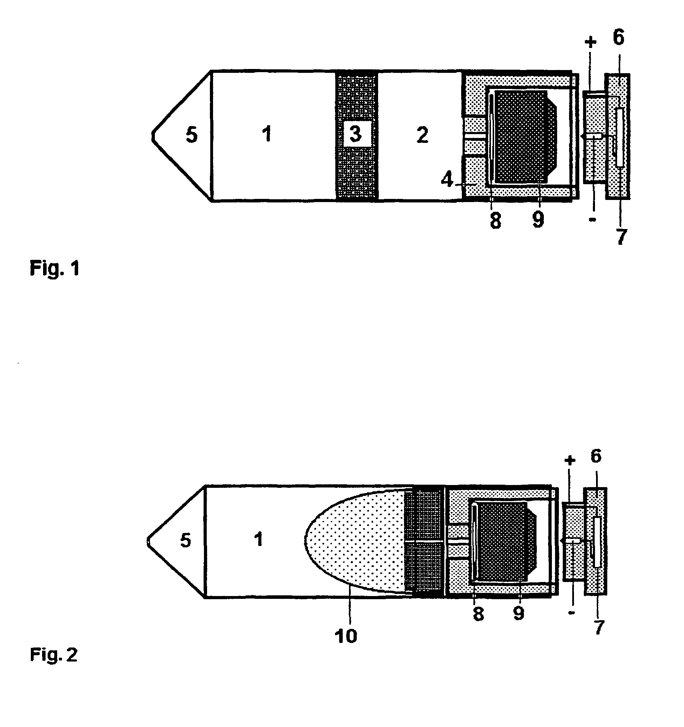

Die Vorrichtung zur Sammlung pastöser Massen, Flüssigkeiten, Gase und anderer mobiler Objekte über einen vorher bestimmbaren Zeitraum besteht - wie in Fig.1 dargestellt - aus dem Pumpenzylinder, in dem der Pumpenkolben 3 geführt ist. Er teilt den Zylinder in einen vorderen Teilraum 1 und einen hinteren Teilraum 2 auf. Der vordere Teilraum enthält den Anschluß 5 zum Aufstecken (DIN-Schliff), Aufschrauben oder Anschweißen eines Schlauchs oder eines Rohrstutzens, mit dem die Probe direkt aus dem Probenbehälter angesaugt wird.

Der hintere Teilraum 2 des Pumpenzylinders enthält ein elektrochemisch verzehrbares Gas und eine elektrochemische Gasverzehrzelle 9 für dieses Gas. 4 ist der Verschlußkopf des Zylinders, der mit der Dichtung 8 die Gasverzehrzelle 9 enthält. Durch einen elektrischer Stromkreis 7 im Deckel 6 wird ständig oder zeitweise ein Strom durch die Elektroden der Gasverzehrzelle erzeugt, der ein äquivalentes Volumen des Verzehrgases im hinteren Teilraum verbraucht. Für dieses "vernichtete" Gasvolumen wird ein gleich großes Probenvolumen eingesaugt.

Nunmehr ist über die Verzehrgase und die zugehörigen Verzehrzellen der Erfindung zu sprechen. Besteht das Verzehrgas aus Sauerstoff, so verwendet man mit Vorteil eine Zink / Sauerstoff-Zelle, wie sie in Knopfzellenform zum Beispiel als Hörgerätezelle Verwendung findet. Im Handel werden diese Sauerstoffverzehrzellen oft auch als Zink / Luftzellen bezeichnet. Statt Zink können auch andere Metalle dienen (Al,Mg,Cu), doch strebt man eine möglichst hohe Spannung bei geringer Korrosionsneigung im stromlosen Zustand an. In dieser Hinsicht ist Zink in den Formen und Legierungen, wie sie die Batterietechnik verwendet, unübertroffen.

Als Sauerstoffverzehrelektroden dienen in den Zellen mit Vorteil mehrschichtige Strukturen, wie sie in der Brennstoffzellen-Technik verwendet werden. Aktivkohle in der Abmischung mit PTFE dient oft als Katalysator für die kathodische Sauerstoffreduktion; als Katalysatoren sind jedoch auch Silber und Manganoxide geeignet. Wünschenswert ist ein Material mit geringer Eigenkapazität, damit der Stromfluß allein und möglichst sofort zu Lasten des Sauerstoffs geht. Die Einbringung der Katalysatormasse in ein Metallnetz ist ebenso seit Jahren Stand der Technik wie die Verwendung einer dem Gas zugewandten hydrophoben Deckschicht aus porösem PTFE.

Statt Sauerstoff kann auch Wasserstoff als Verzehrgas dienen. Verzehrelektroden sind die bekannten Wasserstoffanoden der Brennstoffzellen-Technik. Sie enthalten Platin, Palladium oder Nickel als Katalysatoren und entsprechen in ihrem Aufbau den Sauerstoffelektroden. Überhaupt können Wasserstoffverzehrzellen wie Zink / Luftzellen aufgebaut werden, wenn man das Zinkpulver durch eine elektrochemisch aktive Metalloxidelektrode (MnO, AgO, HgO, CuO, Cu₂O oder CdO) ersetzt und anstelle der Sauerstoffelektrode eine Wasserstoffelektrode verwendet. Die Art des Oxides bestimmt die Spannung der Zelle. Bei allen genannten Oxiden läuft die Verzehrreaktion ohne äußere Spannungsquelle ab. Nur im Falle des Cadmiumhydroxids braucht man wegen zu geringer Spannung eine zusätzliche Spannungsquelle, doch ist hier die Verzehrreaktion umkehrbar.

Als Elektrolyt dient in den meisten Fällen Kalilauge, doch sind auch andere Alkalilaugen geeignet. Verzehrzellen lassen sich auch mit sauren und neutralen Elektrolytlösungen bauen. Immer ist der Elektrolyt in einem saugfähigen Separator zwischen Anode und Kathode untergebracht, unter anderem zur Verhinderung des Sauerstoffzutritts zur Zinkelektrode. Dieser als Selbstentladung zu bezeichnende Vorgang läßt sich dadurch ganz vermeiden, daß man die Verzehrzelle erst bei der Inbetriebnahme der Vorrichtung mit dem Sauerstoff kommunizieren läßt, indem man z.B. die Zutrittslöcher der Gase zur Verzehrelektrode erst dann freigibt.

Diffusionsverluste der Gase können bei Wasserstoff als Verzehrgas doch auch bei Sauerstoff auftreten. Man kann sie minimieren, indem man die betreffenden Dichtungen durch sackartige Folien unterstützt, die den Antriebszylinderraum ausfüllen, die Verzehrzelle enthalten und nur von den Kontaktdrähten durchbrochen werden. Fig.2 zeigt dieses beispielhaft. Kolben und die in Fig. 1 dargestellten Elemente des Gasverzehrraums, das sind Verschlußkopf mit Zelle 9 und Deckel 6 bilden den Raum, der durch den Foliensack 10 mit dem Verzehrgas ausgefüllt ist. Die Folie umschließt auch die Verzehrzelle 8, für die sie die Abdichtung bildet. Die beiden Gehäuseteile der Zelle, das sind der Becher und Deckel, sind von außen zugänglich und können mit den Kontakten des Stromkreises verbunden werden, so daß alle Strom-Zeit-Profile durchfahren werden können.

Bei der besonders geeigneten Zink / Sauerstoff-Variante steht die Spannung solange über 1 V, wie noch Sauerstoff vorhanden ist. Danach bricht sie plötzlich zusammen. Damit es danach nicht zu einer Wasserstoffentwicklung kommt, sorgt man durch Verwendung einer in Flußrichtung gepolten Gleichrichterdiode oder Zenerdiode dafür, daß die Zellspannung nicht unter 0,4 V abfällt. Auch jede andere elektrische Schaltung, die die Spannung der Zelle aus dem Spannungsfenster der Wasserstoffentwicklung heraushält, ist hierfür geeignet. Besonders geschickt ist es, wenn man den Verbrauch des Verzehrgases mit dem Erlöschen eines Betriebsanzeigesignals koppelt. Dieses kann zum Beispiel aus einer Leuchtdiode, aus einem LCD-Feld oder einer akustischen Schnarre bestehen.

Der Aufbau der erfindungsgemäßen Vorrichtung besteht im einfachsten Fall aus dem Förderzylinder, dem Kolben, der den Zylinder in den vorderen Zylinderraum für die Probenaufnahme und den hinteren Zylinderraum für das Verzehrgas und die Verzehrzelle aufteilt. Der vordere Zylinderraum geht in einem Ansaugkanal mit einem optionalen Rückschlagventil über. Das Verzehrgas und die Verzehrzelle können von einer Kunststoff- oder Gummimembran eingeschlossen sein. Gemäß der unter dem Aktenzeichen: 199 09 014.9 angemeldeten Erfindung kann der Kolben eine Bypassbohrung und einen gummie-elastischen Membransack enthalten, der mit dem oberen Rand fest und gasdicht am Kolben befestigt ist, wobei die Form des entfalteten Membransacks dem Innenraum des Förderzylinders angepaßt ist.

Die Bypassbohrung enthält ein Ventil, das bei der Bewegung des Kolbens von der Tülle zum Kopf zum Ansaugen des fließfähigen Mediums verschlossen ist. Bei der Einfüllung des Fördergases öffnet sich das Ventil und gibt den Weg für das Verzehrgas in den gummie-elastischen Membransack frei. Dieser füllt dann den vorderen Zylinderraum vollständig aus.

Die in der Verzehrzelle verwendete Gaselektrode kehrt bei Stromumkehr die Strömungsrichtung des Gases um, sie geht also vom Gasverzehr in die Gasentwicklung über. Verwendet man als Gegenelektrode eine Akkumulatorelektrode, so kann man durch Stromumkehr den Antriebszylinder mit Verzehrgas füllen und die Verzehrzelle regenerieren. Der regenerierte Zustand ist an der Stellung der Kolben zu erkennen und kann zur Abschaltung des Regenerierstromes verwendet werden. Zellkombinationen dieser Art sind H₂ / CdO und H₂ /NiOOH sowie O₂ /Cd (OH)₂ und O₂ /Ni(OH)₂, um je zwei Beispiele für regenerierbare Wasserstoff- und Sauerstoffverzehrzellen zu nennen. Besonders im Falle der mehrfach verwendeten Systeme kann sich ein regenerierbares System als wirtschaftlich herausstellen.

Eine gasbetriebene Fördervorrichtung für fließfähige Medien mit einem Gasverzehrsystem, das Gasvolumen in einer vorgegebenen zeitlichen Menge in Gasverzehrzellen "vernichtet", die einen zylinderförmigen Raum mit einer Ansaugöffnung und einen Kolben aufweisen, der den Zylinder in einen vorderen Teilraum zur Aufnahme des zu fördernden Mediums und in einen zweiten Teilraum aufteilt, der das Gasverzehrsystem und das Verzehrgas enthält, kann auch so ausgestaltet sein, daß Verschlußkopf und Kolben eine im Zylinder bewegliche Einheit bilden mit einem gummie-elastischen Membransack, der an dem Kolben gasdicht befestigt ist, und daß die Einheit aus Verschlußkopf und Kolben das Gasverzehrsystem und den elektrischen Regelkreis enthält und im oberen Teil eine Vorrichtung zur Befestigung eines Schubrohres für die manuelle Bewegung der Einheit im Förderzylinder aufweist.

Der Anwendungsablauf erfolgt in vier Phasen: In der ersten Phase wird die Einheit aus Kolben und zusammengefaltetem Fördersack mit einem einschraub- oder einsteckbarem Schubrohr derart gasdicht verbunden, daß keine Luft in den aus Kolben und Sack gebildeten Innenraum eindringen kann. Über das Schubrohr wird der Sack mit der Quelle des Verzehrgas verbunden und aufgepumpt, bis er den Zylinderraum ganz ausfüllt. Danach wird über optionalen Schlauch und Tülle das Probenmedium kontaktiert. Nunmehr wird das Schubrohr abgedichtet und eventuell abgeschraubt, die Gasverzehrzellen (9) werden mit dem elektrischen Schließungskreis (7) aktiviert.

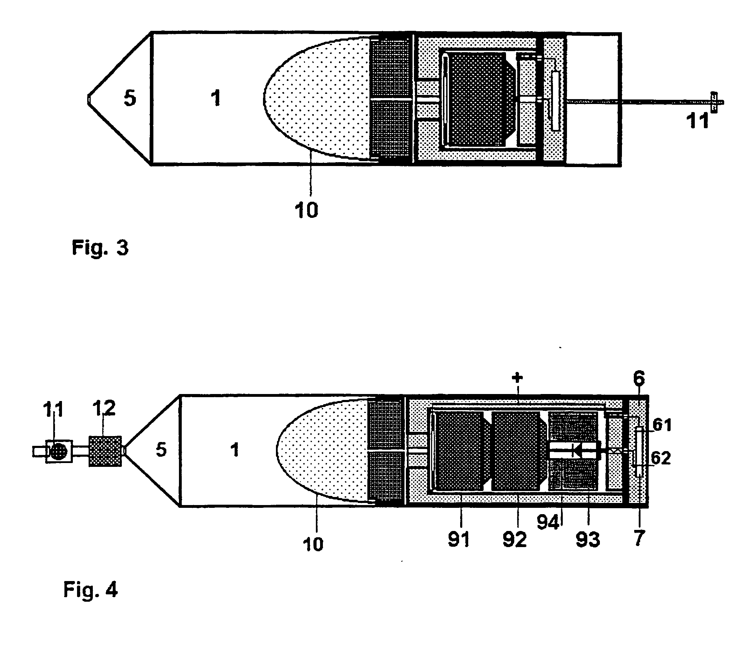

Für die Wirkung des Membransacks ist es wichtig, daß er sich problemlos entfalten und wieder falten läßt. Das gelingt besonders gut, wenn er die Form eines Rotationskörpers mit einer Zickzacklinie oder Sinuslinie als erzeugende Rotationskurve hat. So kann man den Sack (10), wie in Fig. 3 dargestellt, auf einen dornartigen Ansatz am Skelettkörper des Kolbens aufschieben, von dem er beim Einleiten des Verzehrgases abgeschoben und entfaltet wird. Auf diese Weise gelingt es, den Todraumeinfluß gering zu halten. Die Spitze des entfalteten Fördersacks bildet man zweckmäßig als Halbkugel aus; er paßt sich jedoch in jedem Fall am Ende der Gaseinfüllung dank seiner gummie-elastischen Eigenschaften dem Förderzylinder an.

Der vordere Teilraum enthält - wie bereits ausgeführt - den Anschluß 5 zum Aufstecken (DIN-Schliff), Aufschrauben oder Anschweissen eines Schlauchs oder eines Rohrstutzens, mit dem die Probe direkt aus dem Probenbehälter angesaugt wird. In dieser Ansaugleitung kann sich eine Analysenkammer befinden, in der die Probe "online" analysiert wird, wofür elektrische, magnetische, optische, spektroskopische und andere Messverfahren geeignet sind.Der hintere Teilraum 2 des Pumpenzylinders wird nach vom durch den Kolben, nach hinten durch den Verschlußkopf 4 des Zylinders begrenzt. Durch den elektrischen Strom wird das Gas verzehrt und stationär für dieses "vernichtete" Gasvolumen ein gleich großes Probenvolumen eingesaugt. Eine wichtige Rolle in diesem Geschehen spielt die Reibung (Haft- und Gleitreibung) des Kolbens 3 bei der Bewegung im Zylinder, die eine Druckdifferenz zwischen den Räumen 1 und 2 erfordert. Je kleiner die Ansaugrate und je kleiner daher der Verzehrstrom des Gases ist, um so länger ist die Zeit bis zum Beginn der Kolbenbewegung, die hier als Totzeit bezeichnet wird. Um sie zu unterdrücken oder zu verkürzen, kann man sich generell der folgenden Methoden bedienen. Man arbeitet mit einem Startstrom Is und einem Arbeitsstrom Ia, die durch zwei verschiedene Stromkreiselemente (Widerstände) einschaltbar sind. Is wird zunächst so lange eingeschaltet, bis der Kolben sich zu bewegen beginnt. Danach wird dieser Strom abgeschaltet und - eventuell nach einer beliebigen Ruhepause - der Arbeitsstrom Ia eingeschaltet. Bei der Verwendung eines Potentiometers als regelbaren Widerstand für die Einstellung des Verzehrzellenstromes markiert man eine Startstrom-Einstellung, aus der man in die variable Arbeitsstrom-Einstellung manuell oder per Zeitschalter übergeht. Bei der Handschaltung erkennt man den Zeitpunkt der Beendigung des Startvorganges an der beginnenden Kolbenbewegung. Man kann die Abschaltung des Startstromes jedoch auch durch einen Druckschalter bewirken, der durch die Druckdifferenz zwischen den Räumen 1 und 2 sinngemäss betätigt wird. Bei einer Zeitschaltung muss der Gasverbrauch (Δn) durch den die Zeit (Δt) fliessenden Startstrom (Is) so gross sein, dass die dadurch bewirkte Druckabsenkung (Δp) im Verzehrgasraum (2) gleich der Reibungskraft (Kr) des Kolbens im Zylinder ist. Ist Q der Zylinderquerschnitt, Vo das Anfangsvolumen des Raumes (2), po der Anfangsdruck, so ist Δpr = Kr/Q die Druckdifferenz (Δpr) zur Überwindung der Reibung. Die durch den Startstrom Is in der Zeit Δt bewirkte Druckdifferent ist Δp = (RT/zF)(Is/Vo)Δt. Durch Gleichsetzung der beiden Ausdrücke für Δp und Δpr und Umformung findet man die erforderliche Zeit (Δt) bis zur beginnenden Bewegung des Kolbens zu Δt = Kr*(Vo/Q)/(RT/zF)/Is. Beispiel: Kr = 3 N, Q = 25,5 cm², (RT/zF) = 0.007 V, ls = 1,25 V/100 Ω = 0,0125 A ergibt als Startzeit Δt = 807 s = 13,4 min = 0,22 h. Man kann also schon nach 13 min auf den Arbeitswiderstand, z. B. 1000 Ω, schalten. Allein mit diesem Widerstand würde jedoch die Bewegung des Kolbens erst nach 2 Stunden beginnen.

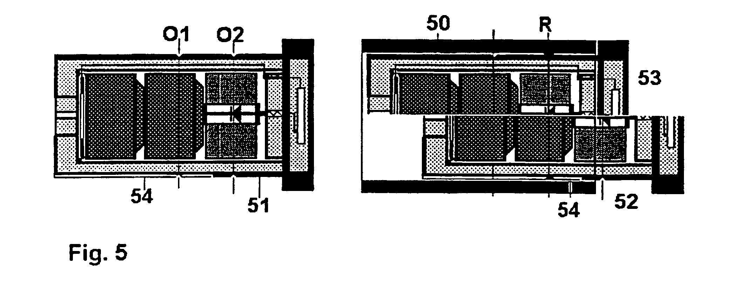

In Fig. 4 ist eine beispielhafte Gesamtdarstellung der Erfindung gezeigt. Über das Rückschlagventil 11 (Kugelventil) wird das fluide Medium in den Online-Analysator 12 bei 5 in den Probenraum 1 eingesaugt. Das Verzehrgas befindet sich im Membransack 10 und im übrigen Zylinderraum. Dieser enthält in dem "Antriebskopf", der als Bauteil - siehe Fig. 5 - in den Zylinderraum eingesteckt werden kann, die Verzehrzellen 91 und 92 in Serienschaltung mit dem Diodenelement 93. Dieses hat mit Vorteil die gleichen Aussenmasse wie die Zellen. Dieses Diodenelement enthält die Diode 94, die mit ihrer Schleusenspannung die Mindestspannung des Batteriesatzes bestimmt, bei dem noch der Verzehrstrom fliessen kann und verhindert die Stromumkehr nach Verzehr dieses Gases, hat also die Funktion eines selbstreagierenden Schalters. Der Strom wird mit dem Potentiometerwiderstand eingeregelt, der hier durch die beiden Stellungen 61 (Starstrom) und 62 (Arbeitsstrom) bestimmt wird. Zusätzlich kann das Potentiometer einen Ein-/Aus-Schalter beherbergen.

Fig. 5 zeigt eine bevorzugte Ausgestaltung des oberen Bereichs des Zylinders 50 und des einsteckbaren Antriebselementes 51. In der linken Figur sind O1 und O2 zwei Ringnuten im zylinderförmigen Antriebskopf. Denen entspricht der in einer Innennut R des Zylinders 50 eingelegte Rundschnurring. Diese Anordnung ermöglicht zwei stabile Einsteckpositionen 52 und 53 des Antriebskopfes 51 im Zylinder 50, die in der unteren und oberen Hälfte demonstriert sind. In der gezogenen Position 52 im unteren Bildteil verbindet der Gaskanal 54 den oberen Bereich des Zylinders mit dem Teilraum 2 zwischen Kolben 3 und Antriebskopf bzw. mit dem Innern der Gasmembran 10. Er ermöglicht dadurch, das Verzehrgas durch einen aufgesetzten Gasschlauch in das Gerät einzuführen. Dabei wird der Kolben 3 in Fig. 1 aus der oberen Position in die untere befördert bzw. der Membransack 10 in Fig. 2 aufgeblasen. Ist dieses geschehen, so drückt man den Antriebskopf in die Endposition 53, die im oberen Teil des Zylinders dargestellt ist. Durch Anpassung des oberen Zylinderbereichs 50 kann man eine Vielzahl von Spritzen verschiedener Grössen mit ein und demselben Antriebskopf ausstatten.

## Patentansprüche

1. Pumpenzylinder,
a) in dem ein Pumpenkolben (3) geführt ist, der den Zylinder in einen vorderen und einen hinteren Teilraum (1, 2) aufteilt,
b) der im vorderen Teilraum (1) einen Anschluß (5) zum Aufsaugen eines zu fördernden fluiden Mediums aufweist,
c) der im hinteren Teilraum (2) des Pumpenzylinders eine oder mehrere elektrochemische Zellen (9, 91, 92) für ein Gas enthält,
d) wobei ein elektrischer Stromkreis vorgesehen ist, der ständig oder zeitweise mit den Elektroden der Zelle verbunden ist,
**dadurch gekennzeichnet, daß**
e) der hintere Teilraum (2) des Pumpenzylinders mit einem elektrochemischen Verzehrgas befüllt und verschlossen ist,
f) die Zelle (9) als Gasverzehrzelle für das Verzehrgas ausgebildet ist,
g) der elektrische Stromkreis (7) einen Arbeitswiderstand aufweist und derart dazu ausgelegt ist, einen Gasverzehrstrom zu verursachen, so daß der Pumpenzylinder eine Vorrichtung zur Sammlung pastöser Massen, Flüssigkeiten, Gase und mobiler Objekte über einen vorher bestimmbaren Zeitraum bildet.

2. Pumpenzylinder nach Anspruch 1, **dadurch gekennzeichnet, daß** das Verzehrgas und die Gasverzehrzelle (9, 91, 92) im Antriebszylinder von einer deformierbaren Plastikfolie (10) eingehüllt sind.

3. Pumpenzylinder nach Anspruch 1 oder 2, **dadurch gekennzeichnet, daß** das Verzehrgas Sauerstoff ist und die Gasverzehrzelle (9) neben einer Gasdiffusionselektrode für Sauerstoff eine Akkumulatorelektrode als Gegenelektrode vorzugsweise in alkalischer Elektrolytlösung enthält.

4. Pumpenzylinder nach einem der vorstehenden Ansprüche, **dadurch gekennzeichnet, daß** in dem Anschluß (5) zum Aufsaugen des zu fördernden fluiden Mediums ein Ventil (11) vorhanden ist, das bei Unterdruck in Saugrichtung öffnet und bei Überdruck in Ausflußrichtung sperrt.

5. Pumpenzylinder nach einem oder mehreren der vorstehenden Ansprüche, **dadurch gekennzeichnet, daß** der elektrische Stromkreis (7) einen Stromfluß in der oder den Verzehrzellen (9, 91, 92) nur in dem Spannungsfenster zuläßt, in dem der Gasverzehr abläuft und in den übrigen Spannungsbereichen den Stromfluß sperrt.

6. Pumpenzylinder nach einem oder mehreren der vorstehenden Ansprüche, **dadurch gekennzeichnet, daß** der elektrische Stromkreis (7) einen optischen oder akustischen Signalgeber enthält, der derart ausgelegt ist, daß er sein Signal dann erzeugt, wenn der Stromfluß im Spannungsfenster abläuft, das den Gasverzehr zuläßt.

7. Pumpenzylinder nach einem oder mehreren der vorstehenden Ansprüche, **dadurch gekennzeichnet, daß** neben dem einstellbaren Arbeitswiderstand ein Startwiderstand vorhanden ist, über den die Verzehrzelle (9, 91, 92) solange kurzgeschlossen ist, bis die Bewegung des Pumpenkolbens (5) einsetzt.

8. Pumpenzylinder nach Anspruch 7, **dadurch gekennzeichnet, daß** zum Ausschalten des Startstromes ein manueller Schalter oder ein Druckschalter vorgesehen ist, der auf die Druckdifferenz zu beiden Seiten des Pumpenkolbens anspricht oder auf die Bewegung des Pumpenkolbens (5) aus der Anfangsstellung des Pumpenkolbens im Zylinder.

9. Pumpenzylinder nach einem der vorstehenden Ansprüche, **dadurch gekennzeichnet, daß** Zeitschalter, Photowiderstände und/oder Photozellen als regelnde Komponenten mit zusätzlichen Gleichstromzellen den Sammelvorgang auf bestimmte Tageszeiten, Lichtverhältnise und/oder andere Gegebenheiten begrenzen.

10. Pumpenzylinder nach einem der vorstehenden Ansprüche, **dadurch gekennzeichnet, daß** der Pumpenzylinder durch einen Einsatz (4) verschlossen ist, der im Pumpenzylinder fixiert und/oder abgedichtet ist, in welchen ein Saugund/oder Treibeinsatz abgedichtet eingeschoben ist, der die wenigstens eine Gasverzehrzelle (9, 91, 92) enthält und/oder die Zenerdiode oder eine Diode (94) mit entsprechender Schleusenspannung.

11. Pumpenzylinder nach einem der vorstehenden Ansprüche, **dadurch gekennzeichnet, daß** der Pumpenkolben (3) eine verschließbare Bohrung aufweist.

12. Pumpenzylinder nach einem der vorstehenden Ansprüche, **dadurch gekennzeichnet, daß** das Verzehrgas eine Inertgasbeimischung aufweist.

13. Pumpenzylinder nach einem der vorstehenden Ansprüche, **gekennzeichnet durch** eine vorzugsweise in eine Ansaugleitung integrierte Analyseeinrichtung (12).

14. Verfahren zur Sammlung von Proben, vorzugsweise von pastösen Massen, Flüssigkeiten, Gasen und/oder anderen mobilen Objekten, während eines vorher bestimmbaren Zeitraums in einem Pumpenzylinder nach einem oder mehreren der vorstehenden Ansprüche, **gekennzeichnet durch** folgende Schritte:
a) Bereitstellen von einem Pumpenzylinder nach einem der vorstehenden Ansprüche:
b) Befüllen des hinteren Teilraumes (2) des Förderzylinders mit dem verzehrbaren Gas,
c) Verbinden eines Anschlußes im vorderen Zylinderraum (1) mit einem Probenraum,
d) Einstellen eines Verzehrstromes in der Gasverzehrzelle (9), der pro Zeiteinheit das zu einer Probenrate äquivalente Volumen des Verzehrgases verbraucht.

15. Verfahren nach Anspruch 14, **gekennzeichnet durch** eine Analyse des entsprechend der zeitlichen Entnahme geschichteten Inhalts oder Vermischung des Inhaltes und dessen Analyse.

16. Verfahren nach Anspruch 14 oder 15 zur Sammlung mobiler biologischer Objekte während eines vorher bestimmbaren Zeitraums in einer Vorrichtung nach den Ansprüchen 1 bis 13, **gekennzeichnet durch** die Einbringung eines Lockmittels in den vorderen Zylinderraum vor dem Einschalten des Verzehrstromes.

## Claims

1. Pump cylinder,
a) in which a pump piston (3) is guided, which splits the cylinder into a front and a rear area element (1, 2),
b) which, in the front area element (1), has a connection (5) for sucking in a fluid medium to be fed,
c) which, in the rear area element (2) of the pump cylinder, contains one or more electrochemical cells (9, 91, 92) for a gas,
d) with an electrical circuit being provided, which is connected to the electrodes of the cell all the time or at times,
**characterized in that**
e) the rear area element (2) of the pump cylinder is filled with an electrochemical consumable gas and is closed,
f) the cell (9) is designed as a gas consumable cell for the consumable gas,
g) the electrical circuit (7) has an operating resistance and is designed to cause a gas consumption flow so that the pump cylinder forms an apparatus for the collection of pasty substances, liquids, gases and mobile objects over a time period which can be determined in advance.

2. Pump cylinder according to Claim 1, **characterized in that** the consumable gas and the gas consumable cell (9, 91, 92) are encased in the operating cylinder by a deformable plastic film (10).

3. Pump cylinder according to Claim 1 or 2, **characterized in that** the consumable gas is oxygen, and the gas consumable cell (9) contains not only a gas diffusion electrode for oxygen but also an accumulator electrode as an opposite electrode, preferably in an alkaline electrolyte solution.

4. Pump cylinder according to one of the preceding claims, **characterized in that** a valve (11) is provided in the connection (5) for sucking in the fluid medium to be fed, opens when reduced pressure exists in the suction direction, and closes when there is an increased pressure in the outlet flow direction.

5. Pump cylinder according to one or more of the preceding claims, **characterized in that** the electrical circuit (7) allows current to flow in the consumable cell or cells (9, 91, 92) only in the voltage window in which the gas consumption takes place, and blocks the current flow in the other voltage ranges.

6. Pump cylinder according to one or more of the preceding claims, **characterized in that** the electrical circuit (7) contains an optical or acoustic signal transmitter, which is designed such that it produces its signal when the current flow takes place in the voltage window that allows the gas consumption.

7. Pump cylinder according to one or more of the preceding claims, **characterized in that**, in addition to the variable operating resistor, a starting resistor is provided, via which the consumable cell (9, 91, 92) is short-circuited until the movement of the pump piston (5) starts.

8. Pump cylinder according to Claim 7, **characterized in that** a manual switch or a pressure switch is provided in order to switch off the starting current, which pressure switch corresponds to the pressure difference between the two sides of the pump piston, or corresponds to the movement of the pump piston (5) from the initial position of the pump piston in the cylinder.

9. Pump cylinder according to one of the preceding claims, **characterized in that** time switches, photo-resistors and/or photocells act as controlling components with additional direct-current cells to limit the collection process to specific times of the day, light conditions and/or other characteristics.

10. Pump cylinder according to one of the preceding claims, **characterized in that** the pump cylinder is closed by an insert (4) which is fixed and/or sealed in the pump cylinder and into which a suction and/or driving insert is inserted in a sealed manner, which suction and/or driving insert contains the at least one gas consumable cell (9, 91, 92) and/or the zener diode or a diode (94) with an appropriate threshold voltage.

11. Pump cylinder according to one of the preceding claims, **characterized in that** the pump piston (3) has a hole which can be closed.

12. Pump cylinder according to one of the preceding claims, **characterized in that** the consumable gas has an inert gas added to it.

13. Pump cylinder according to one of the preceding claims, **characterized by** an analysis device (12) which is preferably integrated in a suction line.

14. Method for collection of samples, preferably of pasty substances, liquids, gases and/or other mobile objects, during a time period which can be defined in advance and in a pump cylinder, according to one or more of the preceding claims, **characterized by** the following steps:
a) provision of a pump cylinder according to one of the preceding claims;
b) filling of the rear area element (2) of the feed cylinder with the consumable gas,
c) connection of a connection in the front cylinder area (1) to a sample area,
d) setting of a consumption current in the gas consumable cell (9), which consumes that volume of the consumable gas which is equivalent to a sample rate in each time unit.

15. Method according to Claim 14, **characterized by** analysis of the content, which is layered corresponding to the time that is consumed, or mixing of the content and its analysis.

16. Method according to Claim 14 or 15 for collection of mobile biological objects during a time period which can be predetermined in advance in an apparatus according to Claims 1 to 13, **characterized by** the introduction of a loosening means in the front cylinder area before the consumption current is switched on.

## Revendications

1. Cylindre de pompage,
a) dans lequel est guidé un piston de pompage (3) qui divise le cylindre en une chambre partielle avant et une chambre partielle arrière (1, 2),
b) qui comporte dans la zone partielle avant (1) un raccord (5) pour l'aspiration d'un fluide à transporter,
c) qui contient dans la chambre partielle arrière (2) du cylindre de pompage une ou plusieurs cellules électrochimiques (9, 91, 92) pour un gaz,
d) prévoyant un circuit électrique qui est relié en permanence ou temporairement aux électrodes de la cellule,
**caractérisé en ce que**
e) la chambre partielle arrière (2) du cylindre de pompage est remplie d'un gaz consommable électrochimique et fermée,
f) la cellule (9) est conçue en tant que cellule de consommation de gaz pour le gaz consommable,
g) le circuit électrique (7) comporte une résistance de travail et est dimensionné de manière à provoquer un courant de consommation de gaz, de façon que le cylindre de pompage forme un dispositif pour recueillir des masses pâteuses, des liquides, des gaz et des objets mobiles pendant un laps de temps pouvant être déterminé au préalable.

2. Cylindre de pompage selon la revendication 1, **caractérisé en ce que** le gaz consommable et la cellule de consommation de gaz (9, 91, 92) sont enveloppés dans le cylindre d'entraînement par une feuille plastique (10) déformable.

3. Cylindre de pompage selon la revendication 1 ou 2, **caractérisé en ce que** le gaz consommable est de l'oxygène et la cellule de consommation de gaz (9) contient, outre une électrode de diffusion de gaz pour l'oxygène, une électrode d'accumulation servant de contre-électrode, de préférence dans un électrolyte alcalin.

4. Cylindre de pompage selon l'une des revendications précédentes, **caractérisé en ce que** dans le raccord (5) pour l'aspiration du fluide à transporter, est prévue une soupape (11) qui, en cas de dépression dans le sens d'aspiration s'ouvre et en cas de surpression dans le sens d'écoulement, se ferme.

5. Cylindre de pompage selon une ou plusieurs des revendications précédentes, **caractérisé en ce que** le circuit électrique (7) n'autorise un écoulement du courant dans la ou les cellules de consommation (9, 91, 92) que dans la fenêtre de tension dans laquelle se déroule la consommation de gaz, et ferme l'écoulement du courant dans les autres domaines de tension.

6. Cylindre de pompage selon une ou plusieurs des revendications précédentes, **caractérisé en ce que** le circuit électrique (7) contient un transmetteur de signaux optique ou acoustique qui est conçu de manière à produire son signal lorsque l'écoulement du courant se déroule dans la fenêtre de tension qui autorise la consommation de gaz.

7. Cylindre de pompage selon une ou plusieurs des revendications précédentes, **caractérisé en ce qu'**il est prévu, outre la résistance de travail réglable, une résistance de démarrage par laquelle la cellule de consommation (9, 91, 92) est court-circuitée jusqu'à ce que s'instaure le mouvement du piston de pompage (5).

8. Cylindre de pompage selon la revendication 7, **caractérisé en ce que** pour couper le courant de démarrage il est prévu un interrupteur manuel ou un pressostat qui réagit à la différence de pression des deux côtés du piston de pompage ou au mouvement du piston de pompage (5) depuis la position initiale du piston de pompage dans le cylindre.

9. Cylindre de pompage selon l'une des revendications précédentes, **caractérisé en ce que** des minuteries, des résistances photoélectriques et/ou des cellules photoélectriques servant de composants de régulation avec des cellules supplémentaires à courant continu, limitent l'accumulation à des heures, des conditions de lumière et/ou d'autres données déterminées.

10. Cylindre de pompage selon l'une des revendications précédentes, **caractérisé en ce que** le cylindre de pompage est fermé par un insert (4) qui est fixé et/ou rendu étanche dans le cylindre de pompage, dans lequel est introduit, de manière étanche, un insert d'aspiration et/ou de refoulement qui contient au moins une cellule de consommation de gaz (9, 91, 92) et/ou la diode Zener ou une diode (94) avec tension de seuil correspondante.

11. Cylindre de pompage selon l'une des revendications précédentes, **caractérisé en ce que** le piston de pompage (3) présente un alésage pouvant être fermé.

12. Cylindre de pompage selon l'une des revendications précédentes, **caractérisé en ce que** le gaz consommable contient un ajout de gaz inerte.

13. Cylindre de pompage selon l'une des revendications précédentes, **caractérisé par** un dispositif d'analyse (12) intégré de préférence dans une conduite d'aspiration.

14. Procédé d'accumulation d'échantillons de préférence de masses pâteuses, de liquides, de gaz et/ou d'autres objets mobiles, pendant un laps de temps pouvant être déterminé au préalable dans un cylindre de pompage selon une ou plusieurs des revendications précédentes, **caractérisé par** les étapes suivantes :
a) préparation d'un cylindre de pompage selon l'une des revendications précédentes ;
b) remplissage de la chambre partielle arrière (2) du cylindre de transport avec le gaz consommable ;
c) liaison d'un raccord dans la chambre de cylindre avant (1) avec une chambre à échantillons ;
d) réglage d'un courant de consommation dans la cellule de consommation de gaz (9) qui consomme, par unité de temps, le volume du gaz consommable équivalant à un échantillon.

15. Procédé selon la revendication 14, **caractérisé par** une analyse du contenu stratifié suivant le prélèvement dans le temps, ou du mélange du contenu et son analyse.

16. Procédé selon la revendication 14 ou 15, pour accumuler des objets biologiques mobiles pendant un laps de temps pouvant être déterminé au préalable dans un dispositif selon les revendications 1 à 13, **caractérisé par** l'introduction d'un moyen de verrouillage dans la chambre du cylindre avant enclenchement du courant de consommation.
